# EUROPEAN PATENT APPLICATION

(11) **EP 1 914 127 A1**
(43) Date of publication of application: **23.04.2008**
(21) Application number: 07013184.2
(22) Date of filing: 05.07.2007
(51) Int. Cl.: B60R 22/00

(54) **Belt buckle holder of static type safety belt of construction equipment seat**

(30) Priority: 17.10.2006 KR 20060100583
(71) Applicant: Volvo Construction Equipment Holding Sweden AB, 631 85 Eskilstuna (SE)
(72) Inventor: Kim, Hak Shin, Hoiwon-gu Masan (KR)
(74) Representative: Schmidt, Sven Hendrik

(57) **Abstract**

A belt buckle holder of a static type safety belt of a construction equipment seat is disclosed, in which a safety belt buckle (2) is stored at a certain portion when a buckled static type safety belt is unbuckled, so that it is possible to prevent an operation part (consisting of buttons or keys) from contacting with a belt buckle (2) irrespective of a driver's intention. In a belt buckle (2) of a static type safety belt of a construction equipment seat which includes a fixing part (1) installed at one side of a seat body (4), and a belt buckle detachably engaged at the fixing part, there is provided a belt buckle holder of a static type safety belt of a construction equipment seat which comprises a pocket type holder (5) which is formed at a side surface, of the seat body (4), with the belt buckle (2) separated from the fixing part (1) being detachably inserted and engaged at the pocket type holder (5).

## Description

### CROSS-REFERENCE TO RELATED APPLICATION

This application is based on and claims priority from Korean Patent Application No. 10-2006-100583, filed on October 17, 2006 in the Korean Intellectual Property Office, the disclosure of which is incorporated herein in its entirety by reference.

### BACKGROUND OF THE INVENTION

### 1. Field of the Invention

The present invention relates to a belt buckle holder of a static type safety belt of a construction equipment seat in which a safety belt buckle is stored at a certain safe portion when a buckled safety belt installed at a driver's cab seat of an excavator or the like is unbuckled, and in particular to a belt buckle holder of a static type safety belt of a construction equipment seat in which a safety belt buckle is stored at a certain safe portion when a buckled static type safety belt is unbuckled, so that it is possible to prevent an operation part(consisting of buttons or keys) from contacting with the unbuckled belt buckle irrespective of a driver's intention.

### 2. Description of the Background Art

Generally, a safety belt, which is installed at a driver's cab seat of a vehicle or heavy construction equipment, is basically designed to minimize the damage of a driver in the course of accident by stably supporting a driver.

The safety belt is classified into a cheap static type belt which includes a fixing part installed at one side of a seat, and a belt buckle installed at the other side of the seat and detachably fixed at the fixing part, and an expensive retractor type belt which provides a belt with a certain tensional force as the belt buckle detachably engaged at the fixing part is automatically wound on a retractor.

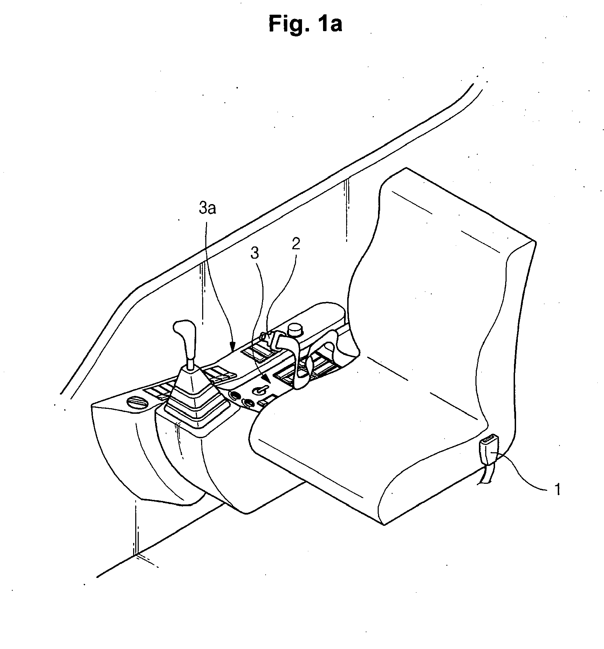

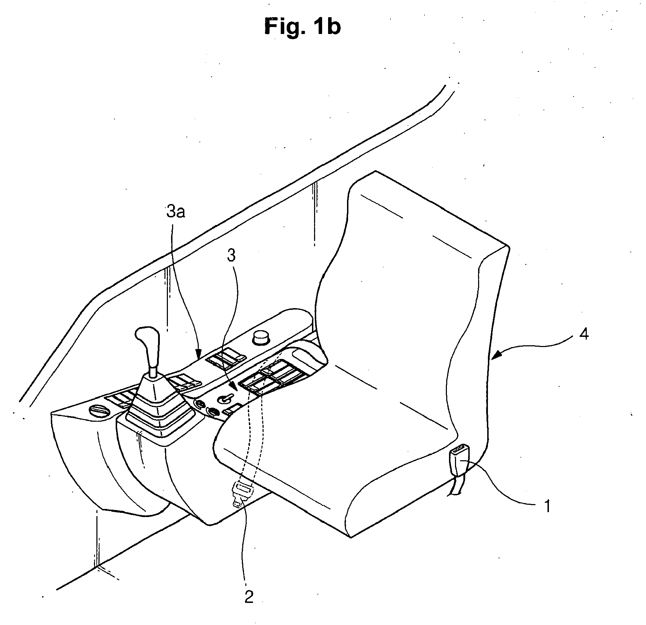

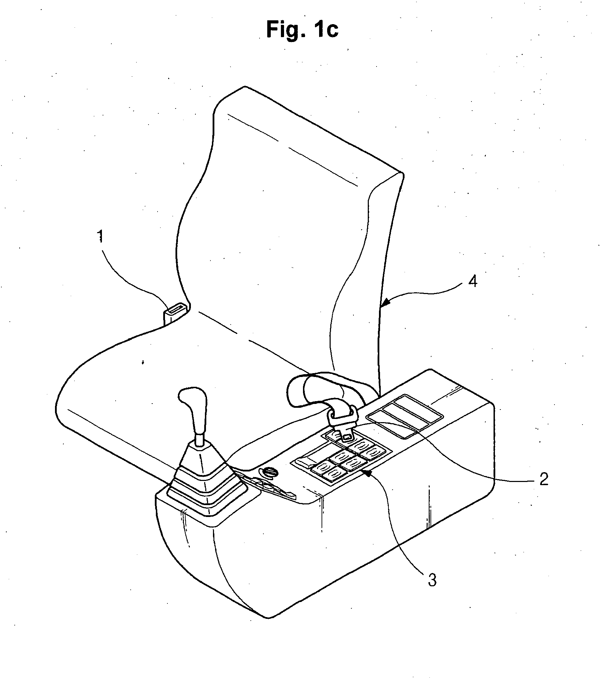

Figures 1A, 1B and 1C are views illustrating the use examples of a belt buckle of a static type safety belt of a construction equipment seat in a conventional art.

As shown in Figures 1A, when a safety belt is unbuckled so that a driver leaves a driver's seat or driver moves freely in a driver's cab without leaving a driver's cab, a belt buckle 2 separated from a fixing part 1 may be just placed on a console box 3 or a control box 3a owing to a driver's carelessness behavior. At this time, when the belt buckle 2 pressurizes a certain button of the control box 3 or the control box 3a, the equipment may operate irrespective of a driver's intention for thereby causing safety accident.

As shown in Figure 1B, the belt buckle 2 separated from the fixing part 1 may be caught between a small gap between the consol box 3 and the control box 3a owing to a driver's carelessness behavior. In this case, it is needed to forcibly get the belt buckle 2 out of a narrow gap for using the safety belt.

As shown in Figure 1C, even when the fixed positions of the fixing part 1 and the belt buckle 2 are changed with each other at the seat body 4, the belt buckle 2 may be just placed on the consol box 3 owing to a driver's carelessness behavior. In this case, the belt buckle 2 may pressurize a certain button, so that the equipment may operate irrespective of a driver's intention for thereby causing safety accident.

In order to resolve the above problems of a cheap static type safety belt, an expensive retractor type belt is used instead. In this case, the unit cost of a safety belt increases. There may be economical problems for being equipped with expensive retractor safety belt. So, the retractor type safety belt is optionally provided to heavy construction equipment.

### SUMMARY OF THE INVENTION

Accordingly, it is an object of the present invention to provide a belt buckle holder of a static type safety belt of a construction equipment seat in which equipment is prevented from operating irrespective of a driver's intention by preventing a belt buckle from contacting with a certain operation button of equipment when a buckled static type safety belt is unbuckled and stored.

It is another object of the present invention to provide a belt buckle holder of a static type safety belt of a construction equipment seat in which the unit cost of a safety belt decreases, and a desired safety is obtained.

To achieve the above objects according to an embodiment of the present invention, in a belt buckle of a static type safety belt of a construction equipment seat which includes a fixing part installed at one side of a seat body, and a belt buckle detachably engaged at the fixing part, there is provided a belt buckle holder of a static type safety belt of a construction equipment seat which comprises a pocket type holder which is formed at a side surface of the seat body, with the belt buckle separated from the fixing part being detachably inserted and engaged at the pocket type holder.

The pocket type holder is provided at a side surface of the backrest of the seat body.

To achieve the above objects according to another embodiment of the present invention, in a belt buckle of a static type safety belt of a construction equipment seat which includes a fixing part installed at one side of a seat body, and a belt buckle detachably engaged at the fixing part, there is provided a belt buckle holder of a static type safety belt of a construction equipment seat which comprises a hook which is engaged at a side surface of the backrest of the seat body, with the belt buckle separated from the fixing part being detachably engaged with the hook.

### BRIEF DESCRIPTION OF THE DRAWINGS

The present invention will become better understood with reference to the accompanying drawings which are given only by way of illustration and thus are not limitative of the present invention, wherein;
Figures 1A, 1B and 1C are views illustrating a state that a belt buckle of a static type safety belt is separated from a receptacle in the conventional art;
Figure 2 is a schematic view illustrating a belt buckle holder of a static type safety belt of a construction equipment seat according to an embodiment of the present invention;
Figure 3 is a detailed view illustrating a belt buckle holder of a static type safety belt of a construction equipment seat according to an embodiment of the present invention;
Figure 4 is a cross sectional view taken along line A-A of Figure 3; and
Figure 5 is side view illustrating a belt buckle holder of a static type safety belt of a construction equipment seat according to another embodiment of the present invention.

### DETAILED DESCRIPTION OF THE PREFERRED EMBODIMENTS

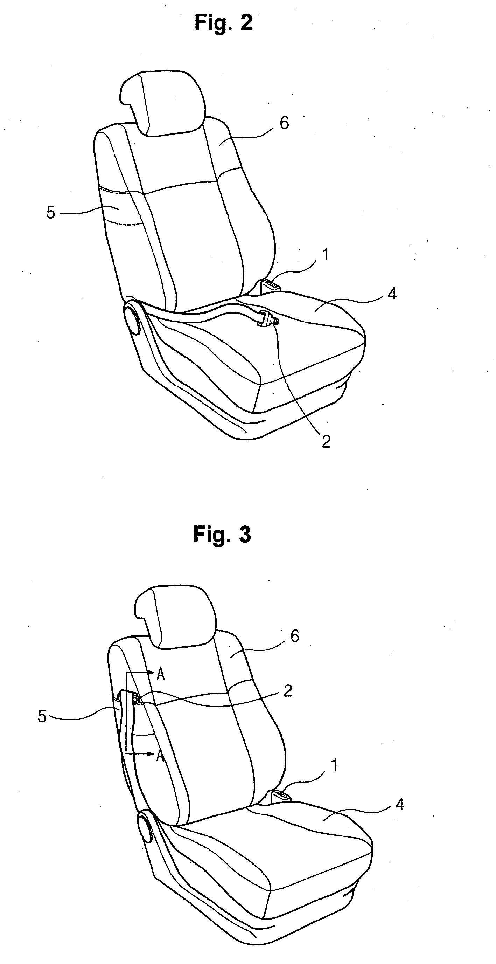

As shown in Figures 2 through 4, in a belt buckle of a static type safety belt of a construction equipment seat which includes a fixing part 1 installed at one side of a seat body 4, and a belt buckle 2 detachably engaged at the fixing part 1, there is provided a belt buckle holder of a static type safety belt of a construction equipment seat which comprises a pocket type holder 5 which is formed at a side surface of the seat body 4, with the belt buckle 2 separated from the fixing part 1 being detachably inserted and engaged at the pocket type holder.

The pocket type holder 5 may be provided at a front surface, back surface or side surface of the backrest 6 of the seat body 4. Preferably, the pocket type holder 5 is provided at a side surface of the backrest 6 so that a driver's hand can easily reach.

The pocket type holder 5 is finished with an inlet of the same being open so that the belt buckle 2 is inserted and stored when the backrest 6 of the seat body 4 is finished.

Since the static type safety belt, which includes a fixing part 1 installed at the seat body 4, and a belt buckle 2 detachably engaged at the fixing part 1, has the same construction as the static type safety belt of Figure 1, the construction and operation of the same will be omitted. Here, the same reference elements are given the same reference numerals.

The use examples of the belt buckle holder of a static type safety belt of a construction equipment seat according to an embodiment of the present invention will be described.

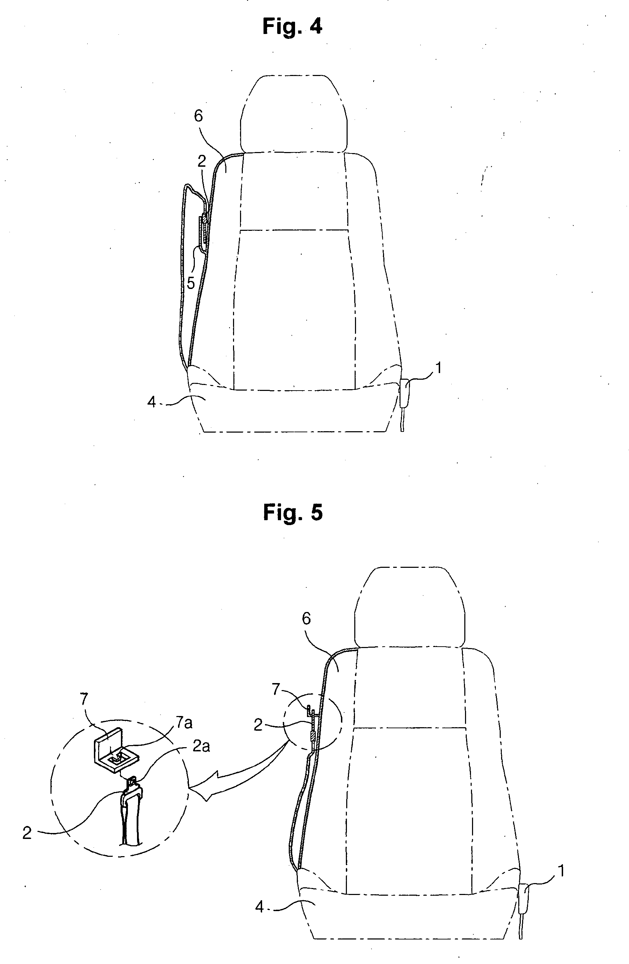

As shown in Figures 3 and 4, when a driver leaves a driver's seat or a driver unbuckles a safety belt for taking a rest in a driver's cab without leaving a driver's seat, the belt buckle 2 separated from the fixing part 1 engaged at one side of the seat body 4 is inserted into the pocket type holder 5 formed at a side surface of the backrest 6.

When the belt buckle 2 separated from the fixing part 1 is placed on the consol box 3 or the control box 3a owing to a driver's carelessness behavior, the belt buckle 2 does not pressurize a certain button of the consol box 3 or the control box 3a for thereby preventing safety accident.

In addition, it is possible to prevent the belt buckle 2 separated from the fixing part 1 from being caught into a small gap formed between the consol box 3 and the control box 3a. With the above construction and operation, the driver can work in safe.

Since the construction of the console box 3 or the control box 3a is the same as that of Figure 1, the descriptions of the same will be omitted.

As shown in Figure 5, according to another embodiment of the present invention, in a belt buckle of a static type safety belt of a construction equipment seat which includes a fixing part 1 installed at one side of a seat body 4, and a belt buckle 2 detachably engaged at the fixing part 1, there is provided a belt buckle holder of a static type safety belt of a construction equipment seat which comprises a hook 7 which is engaged at a side surface of the backrest 6 of the seat body 4, with the belt buckle 2 separated from the fixing part 1 being detachably engaged with the hook 7. Here, the hook 7 may be provided at a front surface, back surface or side surface of the backrest 6 of the seat body 4. More preferably, the hook 7 is provided at a side surface of the backrest 6 so that a driver's hand can easily reach.

Here, the engaging shoulder 7a of the hook 7 is detachably engaged with the through groove 2a of the belt buckle 2.

Since the static type safety belt, which includes the fixing part 1, and the belt buckle 2 detachably engaged at the fixing part 1, has the same construction and operation as the static type safety belt of Figures 3 and 4, the description thereon will be omitted.

The use examples of the belt buckle holder of a static safety belt of a construction equipment seat according to another embodiment of the present invention will be described with reference to the accompanying drawings.

As shown in Figure 5, when a driver unbuckles a buckled safety belt so as to leave a driver's seat, the belt buckle 2 separated from the fixing part 1 is inserted into the hook 7 provided at one side of the backrest 6 and is stored. When the belt buckle 2 is inserted into the hook 7, the engaging shoulder 7a of the hook 2a is detachably locked into the through groove 2a formed at the belt buckle 2.

As described above, the belt buckle holder of a static type safety belt of a construction equipment seat according to the present invention has the following advantages.

When the static type safety belt is unbuckled, it is prevented from being contacted with a belt buckle and an operation button which is provided to operate the equipment, so that the equipment is prevented from operating irrespective of a driver's intention for thereby preventing safety accident.

In addition, the structure of the safety belt according to the present invention is not complicated, and the unit cost is low. A desired safe-related reliability is obtained. The safety belt according to the present invention may be used for various applications.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a belt buckle of a static type safety belt of a construction equipment seat which includes a fixing part installed at one side of a seat body, and a belt buckle detachably engaged at the fixing part, a belt buckle holder of a static type safety belt of a construction equipment seat, comprising:
a pocket type holder which is formed at a side surface of the seat body, with the belt buckle separated from the fixing part being detachably inserted and engaged at the pocket type holder.

2. The holder of claim 1, wherein said pocket type holder is provided at a side surface of the backrest of the seat body.

3. In a belt buckle of a static type safety belt of a construction equipment seat which includes a fixing part installed at one side of a seat body, and a belt buckle detachably engaged at the fixing part, a belt buckle holder of a static type safety belt of a construction equipment seat, comprising:
a hook which is engaged at a side surface of the backrest of the seat body, with the belt buckle separated from the fixing part being detachably engaged with the hook.
